# EUROPEAN PATENT SPECIFICATION

(11) **EP 3 958 252 B1**
(45) Date of publication and mention of the grant of the patent: **22.01.2025**
(21) Application number: 20791236.1
(22) Date of filing: 16.04.2020
(51) Int. Cl.: G10K 11/168, E04B 1/86

(54) **SOUND-ABSORBING MATERIAL**
SCHALLABSORBIERENDES MATERIAL
MATÉRIAU INSONORISANT

(30) Priority: 18.04.2019 WO PCT/JP2019/016685
(43) Date of publication of application: 23.02.2022
(73) Proprietor: Resonac Corporation, Tokyo 105-7325 (JP)
(72) Inventor: TAKAYASU, Satoshi, Tokyo 105-8518 (JP); YOKOKURA, Ai, Tokyo 105-8518 (JP); KOTAKE, Tomohiko, Tokyo 105-8518 (JP)
(74) Representative: Berggren Oy
(86) International application number: PCT/JP2020/016702
(87) International publication number: WO 2020/213676

(56) References cited:
- WO-A1-2018/154864
- JP-A- 2002 215 169
- JP-A- 2012 024 955
- JP-A- H11 242 486
- JP-A- S 637 099
- US-A1- 2009 029 176
- US-A1- 2010 163 167
- US-B2- 8 708 097
- US-B2- 9 676 148

## Description

### Technical Field

The present invention relates to a sound-absorbing material.

### Background Art

Single-layered sound-absorbing structures formed from melt-blown nonwoven fabrics are known (for example, Patent Literature 1).

### Citation List

### Patent Literature

Patent Literature 1: Japanese Unexamined Patent Publication No. 2012-214957

### Summary of Invention

### Technical Problem

In the case of a single-layered sound-absorbing structure formed from a nonwoven fabric, the sound-absorbing characteristics particularly in a low-frequency region are insufficient.

One example of sound-absorbing material is disclosed in US 9676148 B2, which describes a system and method for temporarily sealing holes in a perforated material layer of composite acoustic panel during processing and testing processes. In another example US 2010/163167 A1, a process and an apparatus are described to produce perforations, especially for perforated acoustic skins. In addition, WO 2018/154864 A1 discusses a sound absorbing material which is thin and lightweight with sound absorbing properties in low frequency.

The present invention has been achieved in view of such circumstances as described above, and it is an object of the present invention to provide a sound-absorbing material having excellent sound-absorbing characteristics in a low-frequency region.

### Solution to Problem

The present invention provides a sound-absorbing material according to claim 1.

According to an embodiment, the resin film may be formed from a polyolefin, a polyester, or a polyamide.

According to an embodiment, the thickness of the sound-absorbing material may be 1 to 100 mm.

According to an embodiment, the sound-absorbing material may have a normal incidence sound absorption coefficient of 0.3 or higher at a certain frequency of 1 kHz or less as measured according to JIS A 1405-1.

### Advantageous Effects of Invention

According to the present invention, a sound-absorbing material having excellent sound-absorbing characteristics in a low-frequency region can be provided.

### Brief Description of Drawings

FIG. 1 is a schematic cross-sectional view of a sound-absorbing material.
FIG. 2 is a diagram showing the normal incidence sound absorption coefficients of Examples.
FIG. 3 is a diagram showing the normal incidence sound absorption coefficients of Examples.
FIG. 4 is a diagram showing the normal incidence sound absorption coefficients of Examples.
FIG. 5 is a diagram showing the normal incidence sound absorption coefficients of Examples.
FIG. 6 is a diagram showing the normal incidence sound absorption coefficients of Examples.
FIG. 7 is a diagram showing the normal incidence sound absorption coefficients of Comparative Examples.
FIG. 8 is a diagram showing the normal incidence sound absorption coefficients of Comparative Examples.

### Description of Embodiments

### <Sound-absorbing material>

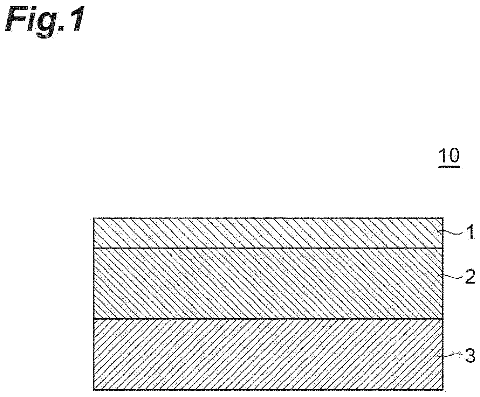

FIG. 1 is a schematic cross-sectional view of a sound-absorbing material. A sound-absorbing material 10 comprises a resin film 1; a first substrate layer 2 having communication holes; and a second substrate layer 3 having communication holes, in this order. Sound (acoustic energy) incident from the resin film side is dissipated as thermal energy when it passes through the sound-absorbing material. As a result, attenuation of sound is observed.

### (Substrate layer)

Examples of the substrate layer having communication holes include a resin foam, a nonwoven fabric, a polymer porous body, and a porous ceramic. Among these, from the viewpoint of having excellent sound-absorbing characteristics in a low-frequency region, the substrate layer may be a resin foam or a nonwoven fabric. The first substrate layer and the second substrate layer may be formed from the same material or may be formed from different materials.

Examples of the material for the resin foam include a polyethylene resin, a polypropylene resin, a polyurethane resin, a polyester resin, an acrylic resin, a polystyrene resin, a melamine resin, a silicone resin, natural rubber, and a synthetic rubber. From the viewpoints of heat resistance, flame retardancy, and the like, the material for the resin foam may be a melamine resin.

Examples of the fiber forming the nonwoven fabric include organic fibers and inorganic fibers. Examples of the organic fibers include fibers of polyolefins such as polyethylene (low-density or high-density), polypropylene, copolymerized polyethylene, and copolymerized polypropylene; fibers of polyesters such as polyethylene terephthalate, polytrimethylene terephthalate, polybutylene terephthalate, polyethylene naphthalate, and polybutylene naphthalate; acrylic fibers, polyamide fibers, nylon fibers, rayon fibers; and natural fibers such as wool. Furthermore, examples of the inorganic fibers include glass fibers, metal fibers, ceramic fibers, and carbon fibers. The fibers forming the nonwoven fabric can comprise one kind or two or more kinds of these.

From the viewpoint of having excellent sound-absorbing characteristics in a low-frequency region, the thickness of the substrate layer can be set to 0.1 to 50 mm and may be 0.5 to 20 mm, may be 2.0 to 20 mm, or may be 2.0 or 10 mm. The first substrate layer and the second substrate layer may have the same thickness or may have different thicknesses. From the viewpoint of having excellent sound-absorbing characteristics in a low-frequency region, the thickness of the first substrate layer (substrate layer on the incident side of sound) is thinner than the thickness of the second substrate layer.

From the viewpoint of having excellent sound-absorbing characteristics in a low-frequency region, the areal weight of the substrate layer can be set to 10 to 1000 g/m² and may be 30 to 800 g/m², may be 30 to 700 g/m², may be 50 to 500 g/m², or may be 150 to 300 g/m². The first substrate layer and the second substrate layer may have the same areal weight or may have different areal weights.

From the viewpoint of having excellent sound-absorbing characteristics in a low-frequency region, the density of the substrate layer is set to 0.005 to 1.0 g/cm³ according to the claimed invention. The first substrate layer and the second substrate layer may have the same density or may have different densities.

From the viewpoint of having excellent sound-absorbing characteristics in a low-frequency region, the sound-absorbing material may further comprise another substrate layer having communication holes. That is, the sound-absorbing material may further comprise a third substrate layer having communication holes, a fourth substrate layer having communication holes, and the like in addition to the first substrate layer having communication holes and the second substrate layer having communication holes. Each of the substrate layers may be formed from the same material or may be formed from different materials.

### (Resin film)

Examples of the resin forming the resin film include polyolefin-based resins such as polyethylene (low-density or high-density), polypropylene, copolymerized polyethylene, and copolymerized polypropylene; polyester-based resins such as polyethylene terephthalate, polytrimethylene terephthalate, polybutylene terephthalate, polyethylene naphthalate, and polybutylene naphthalate; fluorine-based resins such as PTFE, FEP, and PFA; polyimide-based resins, polyamide-based resins, aramid-based resins, vinyl chloride-based resins, acrylic resins, polycarbonate-based resins, polyphenylene sulfide-based resins, polyvinyl alcohol-based resins, polystyrene-based resin, polyacrylonitrile-based resins, and ethylene-vinyl acetate-based resins.

From the viewpoint of having excellent sound-absorbing characteristics in a low-frequency region, the thickness of the resin film can be set to 0.5 to 500 µm and may be 5 to 250 µm or may be 10 to 100 µm. The first resin film and the second resin film may have the same thickness or may have different thicknesses. Furthermore, from the viewpoint of having excellent sound-absorbing characteristics in a low-frequency region, the ratio of the thickness of the resin film to the thickness of the substrate layers (thickness of substrate layers/thickness of resin film) can be set to 1 to 20000 and may be 10 to 10000 or may be 100 to 1000.

From the viewpoint of imparting a function of enhancing the sound absorbing effect by adjustment of the film characteristics and a heat-ray reflecting function, the resin film comprises a metal vapor deposition layer on the surface. That is, the sound-absorbing material further comprises a metal vapor deposition layer on at least one surface of the first resin film and the second resin film. The metal vapor deposition layer can be formed by physical vapor deposition such as vacuum vapor deposition or chemical vapor deposition of a metal such as aluminum, copper, zinc, a zinc alloy, or silver. The metal vapor deposition layer may be provided on both surfaces of a resin film or may be provided on one surface.

From the viewpoint of enhancing the sound absorbing effect in a low-frequency region and adjusting the sound absorption frequency peak, the resin film may be a perforated film. The perforated film may have holes arranged in a grid pattern or in a diamond pattern. From the viewpoint of having excellent sound-absorbing characteristics in a low-frequency region, these holes may have a circular shape with a diameter of 0.1 to 50.0 mm, may have a circular shape with a diameter of 0.2 to 10.0 mm, or may have a circular shape with a diameter of 0.3 to 5.0 mm. The shape of the holes may be a circular shape, an elliptical shape, a rectangular shape, a polygonal shape, or the like.

From the viewpoint of having excellent sound-absorbing characteristics in a low-frequency region, the resin film may be further provided between the first substrate layer having communication holes and the second substrate layer having communication holes. Furthermore, in a case where the sound-absorbing material further comprises a third substrate layer, a fourth substrate layer, and the like, the resin film may be further provided between those substrate layers. Each of the resin films may be formed from the same material or may be formed from different materials.

### (Adhesive layer)

The sound-absorbing material further comprises an adhesive layer between the respective above-described layers. The sound-absorbing material comprises an adhesive layer between the resin film and the first substrate layer and between the first substrate layer and the second substrate layer. Examples of the adhesive layer include, a layer including an adhesive component such as a polyester resin, a vinyl acetate resin, an ethylene-vinyl acetate copolymerized resin, an isobutene-maleic anhydride copolymerized resin, an acrylic copolymerized resin, an acrylic monomer, an acrylic oligomer, a vinyl chloride resin, a urethane resin (including a moisture-curable resin), a silylated urethane resin, an epoxy resin, a modified epoxy resin, a polyolefin resin such as a polyethylene resin, an ionomer resin, a silicone resin, a modified silicone resin, a synthetic rubber such as a styrene-butadiene rubber, a chloroprene rubber, or a nitrile rubber, natural rubber such as isoprene rubber, water glass, or silicate; and a layer formed from a laminate comprising layers containing these adhesive components on both surfaces of a support formed from paper, cloth, a resin tape, a metal tape, or the like. Furthermore, the adhesive layer may also be a product (adhesive sheet) comprising the above-described layer containing an adhesive component or the above-described laminate on both surfaces of a resin film. In this case, as the resin film, the above-described resin films can be used. The respective adhesive layers may be formed from the same material or may be formed from different materials.

The thickness of the adhesive layer is not particularly limited; however, the thickness can be set to 0.01 to 500 µm or may be 1 to 250 µm. The respective adhesive layers may have the same thickness or may have different thicknesses.

From the viewpoints of exhibiting sound-absorbing characteristics, workability of the materials, space saving, and the like, the thickness of the sound-absorbing material can be set to 1 to 100 mm and may be 2 to 50 mm or may be 5 to 30 mm.

The sound-absorbing material can have a normal incidence sound absorption coefficient of 0.3 or higher, or 0.4 or higher, as measured according to JIS A 1405-1 at a certain frequency of 1 kHz or less, specifically at least at any one frequency of 250 Hz, 500 Hz, and 1 kHz. This normal incidence sound absorption coefficient can be set to 0.3 or higher and may also be 0.4 or higher, at 1 kHz. This normal incidence sound absorption coefficient can be set to 0.2 or higher and may be 0.3 or higher, at 750 kHz. This sound absorption coefficient can be set to 0.1 or higher and may be 0.15 or higher, at 500 kHz.

### <Method for producing sound-absorbing material>

The sound-absorbing material is produced by laminating each of the layers. The sound-absorbing material is used in a state in which the respective layers are adhered by providing the adhesive layers as described above;
Furthermore, the adhesive layer may be provided between some layers only. The laminate constituting the sound-absorbing material may be used in a state of being housed in a case.

### <Use application of sound-absorbing material>

The sound-absorbing material has excellent sound-absorbing characteristics in a low-frequency region. Therefore, the sound-absorbing material can be suitably used for use applications such as automobiles, railroad vehicles, aircrafts, ships, buildings such as houses, electronic devices, and precision machines. The low-frequency region as used herein can be set to a region with a frequency of 1 kHz or less and may be a region with a frequency of 800 Hz or less, may be a region with a frequency of 750 Hz or less, or may be a region with a frequency of 500 Hz or less.

### Examples

Hereinafter, the present invention will be described in more detail by way of Examples; however, the present invention is not intended to be limited to these Examples.

### (Preparation of substrate layer)

The substrate layers indicated in Table 1 were prepared.

**[Table 1]**

| Item | Unit | Substrate 1 | Substrate 2 | Substrate 3 | Substrate 4 |
|---|---|---|---|---|---|
| Material | - | Melamine resin foam | Polyethylene terephthalate nonwoven fabric | Polyolefin nonwoven fabric | Polyethylene terephthalate nonwoven fabric |
| Areal weight | g/m² | 45 | 230 | 250 | 210 |
| Thickness | mm | 5.0 | 7.0 | 3.3 | 2.5 |
| Density | g/cm³ | 0.009 | 0.036 | 0.076 | 0.084 |

| Item | Unit | Substrate 5 | Substrate 6 | Substrate 7 | Substrate 8 |
|---|---|---|---|---|---|
| Material | - | Polyethylene terephthalate nonwoven fabric | Polyolefin nonwoven fabric | Acrylic nonwoven fabric | Polyethylene terephthalate nonwoven fabric |
| Areal weight | g/m² | 550 | 220 | 270 | 750 |
| Thickness | mm | 6.0 | 2.2 | 3.0 | 18.0 |
| Density | g/cm³ | 0.092 | 0.100 | 0.090 | 0.042 |

### (Preparation of resin film)

The following resin films were prepared.
Double-sided aluminum vapor-deposited polyethylene terephthalate film (Al vapor-deposited PET): thickness 12 µm
Polyethylene terephthalate film A (PET-A): thickness 12 µm
Polyethylene terephthalate film B (PET-B): thickness 25 µm
Polyethylene terephthalate film C (PET-C): thickness 50 µm
Polyethylene terephthalate film D (PET-D): thickness 250 µm
Biaxially oriented polypropylene film (OPP): thickness 20 µm
Polyethylene film (PE): thickness 25 µm

### (Preparation of adhesive layer)

The following adhesive layers were prepared.
Double-sided tape A: 3M Japan Limited, PGD-100 (0.12 mm thick, substrate: nonwoven fabric)
Double-sided tape B: Hitachi Chemical Co., Ltd., HI-BON 25-563 (0.15 mm thick, substrate: Al foil)
Adhesive A: 3M Japan Limited, spray adhesive No. 77
Adhesive B: KLEBCHEMIE M.G. Becker GmbH & Co. KG, polyolefin hot melt resin (966P, 50 g/m² applied)
Adhesive C: KLEBCHEMIE M.G. Becker GmbH & Co. KG, synthetic rubber hot melt resin (939S, 50 g/m² applied)
Adhesive D: KLEBCHEMIE M.G. Becker GmbH & Co. KG, moisture-curable polyurethane hot melt resin (PUR700.5, 50 g/m² applied)
Adhesive sheet A: Product comprising the double-sided tape A on both surfaces of the Al vapor-deposited PET
Adhesive sheet B: Product comprising the layer of the adhesive A on both surfaces of the Al vapor-deposited PET
Adhesive sheet C: Kurabo Industries Ltd., polyolefin hot melt resin sheet (X4300, 0.05 mm thick)
Adhesive sheet D: Kurabo Industries Ltd., polyester sheet hot melt resin sheet (G-5, 0.03 mm thick)
Adhesive sheet E: Kurabo Industries Ltd., polyurethane hot melt resin sheet (S-1700, 0.05 mm thick)

### (Production of sound-absorbing material)

Sound-absorbing materials having the configurations shown in Table 2 and Table 3 were produced. For the adhesion of each layer, a double-sided tape, an adhesive, or an adhesive sheet was used. Regarding *1 in the tables, the adhesion between a resin film and a first substrate layer was conducted using the double-sided tape A or the adhesive A, and the adhesion between a first substrate layer and a second substrate layer was conducted using the adhesive sheet A, the adhesive sheet B, or the double-sided tape B.

**[Table 2]**

| Item | Configuration | Adhesive layer |
|---|---|---|
| Example 1 | Al vapor-deposited PET/substrate 1/substrate 1 | Double-sided tape A |
| Example 2 | Al vapor-deposited PET/substrate 2/substrate 2 | |
| Example 3 | Al vapor-deposited PET/substrate 4/substrate 2 | |
| Example 4 | Al vapor-deposited PET/substrate 4/substrate 5 | |
| Example 5 | Al vapor-deposited PET/substrate 7/substrate 2 | |
| Example 6 | Al vapor-deposited PET/substrate 2/substrate 2 | Adhesive A |
| Example 7 | Al vapor-deposited PET/substrate 3/substrate 2 | |
| Example 8 | Al vapor-deposited PET/substrate 4/substrate 2 | Adhesive B |
| Example 9 | Al vapor-deposited PET/substrate 4/substrate 2 | Adhesive C |
| Example 10 | Al vapor-deposited PET/substrate 4/substrate 2 | Adhesive D |
| Example 11 | PET-A/substrate 4/substrate 2 | Double-sided tape A |
| Example 12 | PET-B/substrate 4/substrate 2 | |
| Example 13 | PET-C/substrate 4/substrate 2 | |
| Example 14 | PET-D/substrate 4/substrate 2 | |
| Example 15 | OPP/substrate 4/substrate 2 | |
| Example 16 | PE/substrate 4/substrate 2 | |
| Example 17 | Al vapor-deposited PET/substrate 3/substrate 2 | Double-sided tape A/adhesive sheet A*¹ |
| Example 18 | Al vapor-deposited PET/substrate 4/substrate 2 | |
| Example 19 | Al vapor-deposited PET/substrate 2/substrate 2 | Adhesive A/adhesive sheet B*¹ |
| Example 20 | Al vapor-deposited PET/substrate 4/substrate 2 | |
| Example 21 | Al vapor-deposited PET/substrate 2/substrate 2 | Double-sided tape A/double-sided tape B*¹ |
| Example 22 | Al vapor-deposited PET/substrate 2/substrate 8 | |
| Example 23 | Al vapor-deposited PET/substrate 4/substrate 2 | Adhesive sheet C |
| Example 24 | Al vapor-deposited PET/substrate 4/substrate 2 | Adhesive sheet D |
| Example 25 | Al vapor-deposited PET/substrate 4/substrate 2 | Adhesive sheet E |

**[Table 3]**

| Item | Configuration | Adhesive layer |
|---|---|---|
| Comparative Example 1 | Substrate 1 | - |
| Comparative Example 2 | Substrate 1 (product having thickness of 10 mm) | |
| Comparative Example 3 | Substrate 2 | |
| Comparative Example 4 | Substrate 5 | |
| Comparative Example 5 | Substrate 6 | |
| Comparative Example 6 | Substrate 8 | |
| Comparative Example 7 | Substrate 1/substrate 1 | Adhesive A |
| Comparative Example 8 | Substrate 2/substrate 2 | |
| Comparative Example 9 | Substrate 3/substrate 2 | |
| Comparative Example 10 | Substrate 4/substrate 2 | |
| Comparative Example 11 | Al vapor-deposited PET/substrate 2 | Double-sided tape A |

### (Evaluation of sound-absorbing characteristics of sound-absorbing material)

The normal incidence sound absorption coefficient of each of the produced sound-absorbing materials was measured as follows. Sound was made incident from the layer described on the left-hand side in Table 2. The measurement results are shown in Table 4 and Table 5.
Apparatus name: 4206 type impedance tube (Bruel & Kjaer VTS, Ltd.)
Measurement method: Normal incidence sound absorption coefficient (according to JIS A 1405-1)
Measurement range: 50 to 1600 Hz

**[Table 4]**

| Item | Normal incidence sound absorption coefficient | | | |
|---|---|---|---|---|
| | 250 Hz | 500 Hz | 750 Hz | 1 kHz |
| Example 1 | 0.04 | 0.17 | 0.31 | 0.59 |
| Example 2 | 0.07 | 0.27 | 0.63 | 0.75 |
| Example 3 | 0.07 | 0.28 | 0.44 | 0.84 |
| Example 4 | 0.05 | 0.27 | 0.55 | 0.45 |
| Example 5 | 0.07 | 0.27 | 0.53 | 0.81 |
| Example 6 | 0.07 | 0.24 | 0.69 | 0.41 |
| Example 7 | 0.06 | 0.15 | 0.45 | 0.49 |
| Example 8 | 0.08 | 0.19 | 0.38 | 0.71 |
| Example 9 | 0.08 | 0.18 | 0.36 | 0.71 |
| Example 10 | 0.02 | 0.16 | 0.37 | 0.56 |
| Example 11 | 0.07 | 0.26 | 0.61 | 0.73 |
| Example 12 | 0.07 | 0.26 | 0.49 | 0.70 |
| Example 13 | 0.07 | 0.29 | 0.50 | 0.63 |
| Example 14 | 0.06 | 0.27 | 0.62 | 0.72 |
| Example 15 | 0.06 | 0.22 | 0.52 | 0.84 |
| Example 16 | 0.08 | 0.30 | 0.50 | 0.82 |
| Example 17 | 0.06 | 0.28 | 0.50 | 0.59 |
| Example 18 | 0.07 | 0.32 | 0.55 | 0.73 |
| Example 19 | 0.08 | 0.38 | 0.72 | 0.68 |
| Example 20 | 0.05 | 0.26 | 0.48 | 0.61 |
| Example 21 | 0.09 | 0.31 | 0.69 | 0.74 |
| Example 22 | 0.16 | 0.69 | 0.86 | 0.54 |
| Example 23 | 0.06 | 0.19 | 0.45 | 0.78 |
| Example 24 | 0.06 | 0.17 | 0.44 | 0.80 |
| Example 25 | 0.08 | 0.18 | 0.39 | 0.76 |

**[Table 5]**

| Item | Normal incidence sound absorption coefficient | | | |
|---|---|---|---|---|
| | 250 Hz | 500 Hz | 750 Hz | 1 kHz |
| Comparative Example 1 | 0.02 | 0.03 | 0.05 | 0.06 |
| Comparative Example 2 | 0.03 | 0.05 | 0.08 | 0.12 |
| Comparative Example 3 | 0.03 | 0.05 | 0.06 | 0.07 |
| Comparative Example 4 | 0.02 | 0.04 | 0.05 | 0.08 |
| Comparative Example 5 | 0.03 | 0.03 | 0.03 | 0.04 |
| Comparative Example 6 | 0.04 | 0.09 | 0.14 | 0.19 |
| Comparative Example 7 | 0.02 | 0.06 | 0.08 | 0.12 |
| Comparative Example 8 | 0.05 | 0.08 | 0.11 | 0.14 |
| Comparative Example 9 | 0.04 | 0.07 | 0.10 | 0.13 |
| Comparative Example 10 | 0.04 | 0.07 | 0.09 | 0.12 |
| Comparative Example 11 | 0.03 | 0.08 | 0.14 | 0.16 |

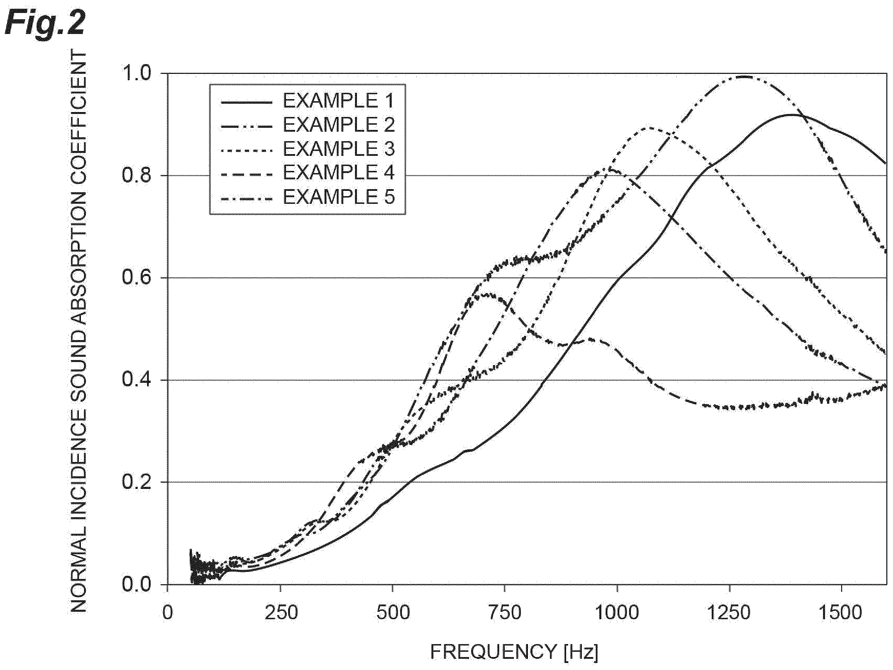

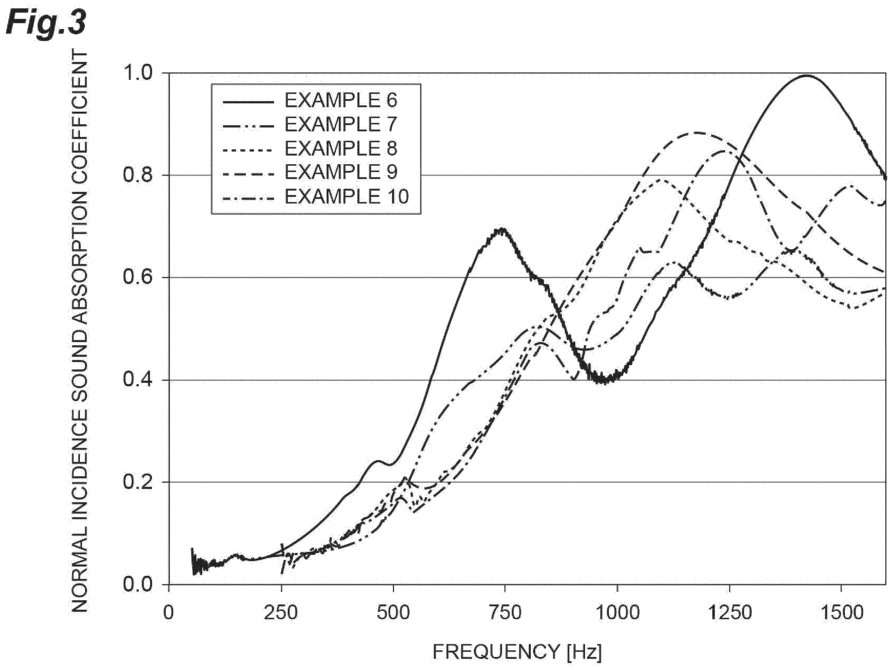

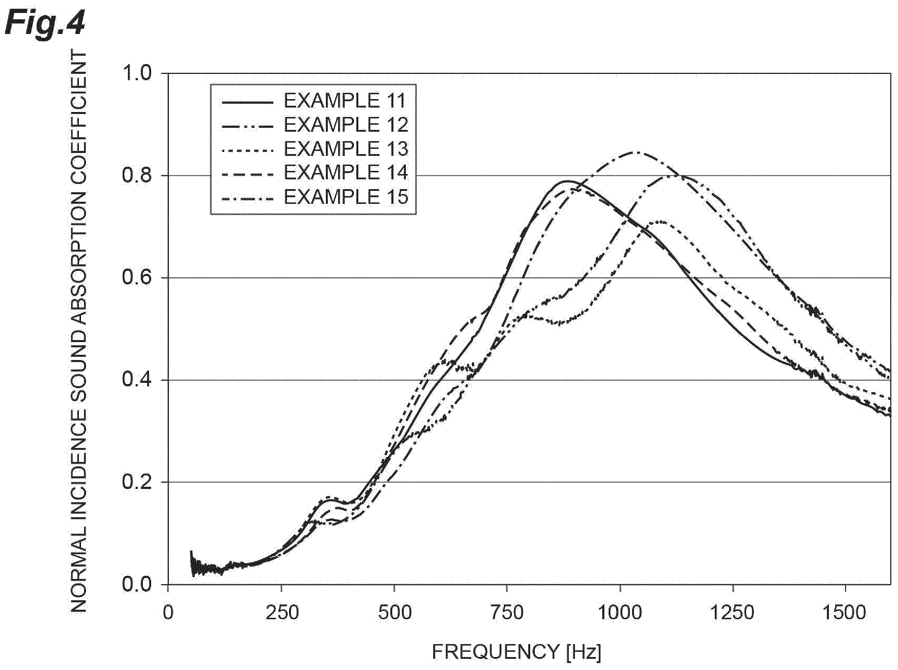

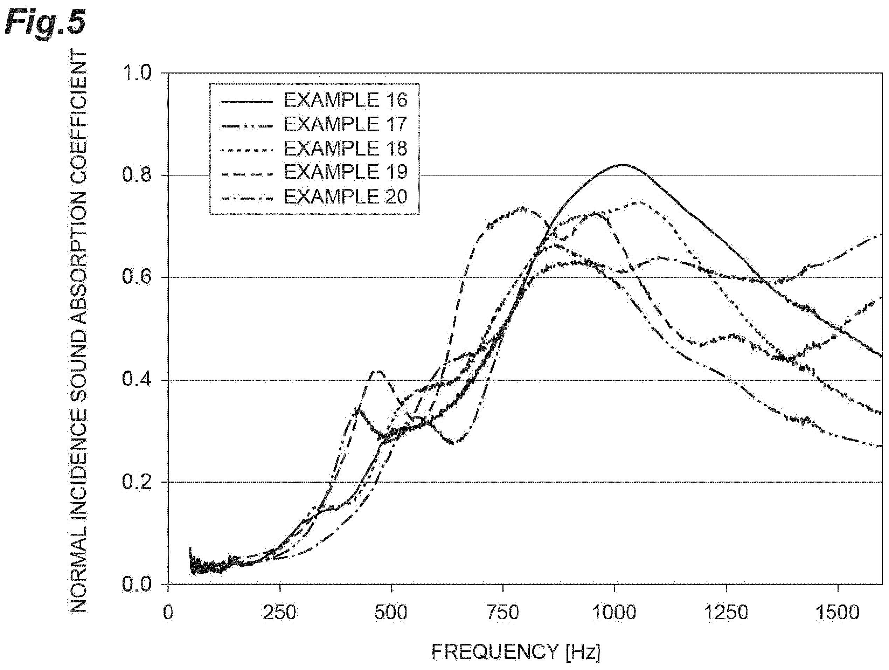

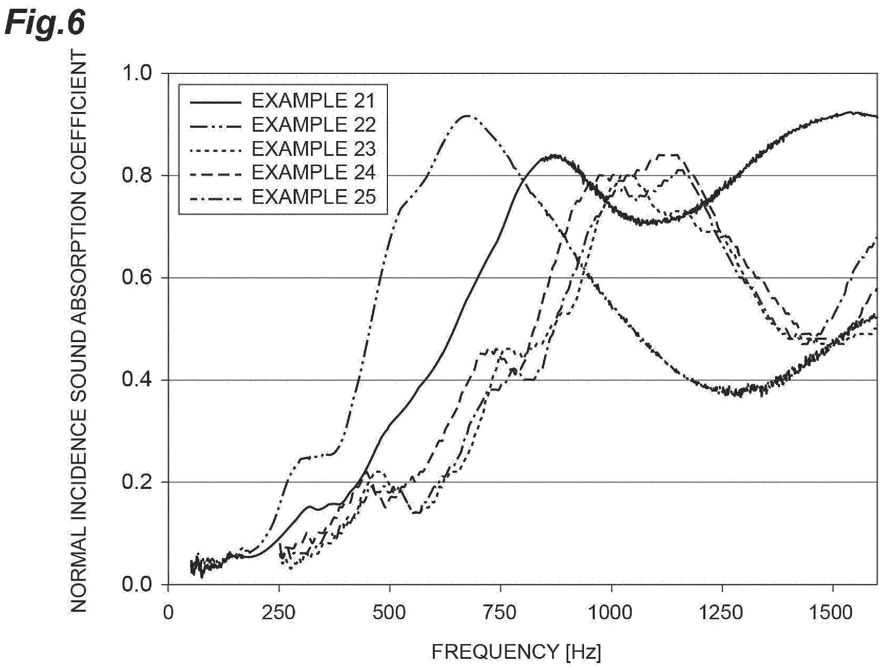

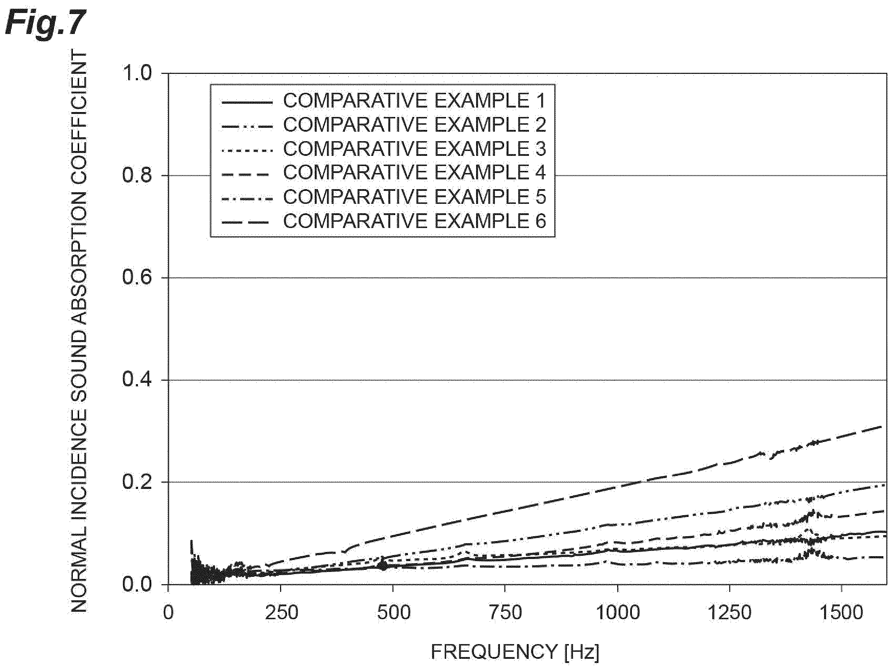

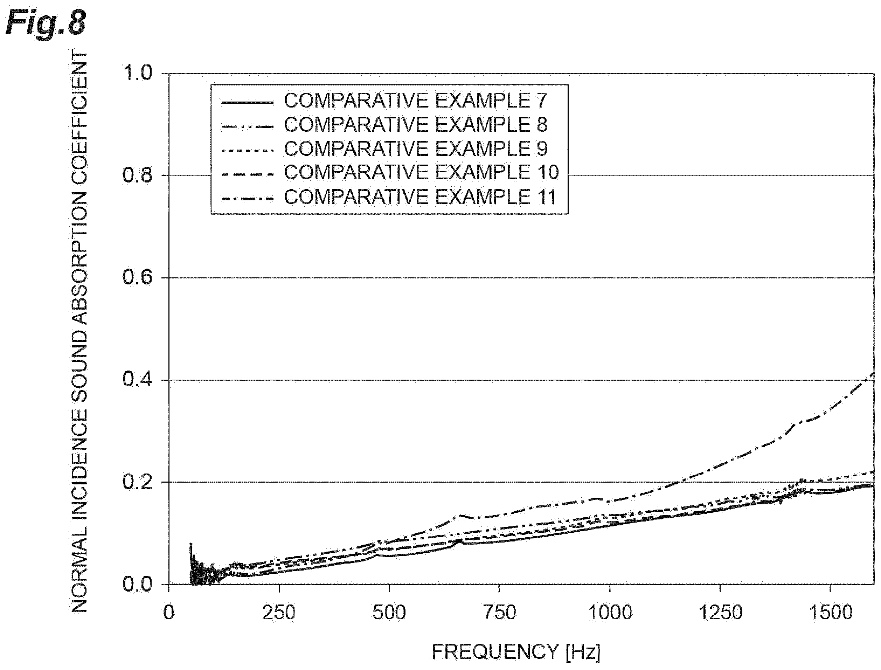

FIGS. 2 to 8 are diagrams showing the respective normal incidence sound absorption coefficients of Examples and Comparative Examples. As shown in the same diagrams, it is understood that the sound-absorbing materials of Examples have excellent sound-absorbing characteristics in a low-frequency region.

### Reference Signs List

1: resin film, 2: first substrate layer having communication holes, 3: second substrate layer having communication holes, 10: sound-absorbing material.

## Claims

1. A sound-absorbing material (10) comprising a resin film (1); a first adhesive layer; a first substrate layer (2) having communication holes; a second adhesive layer; and a second substrate layer (3) having communication holes, in this order, wherein the first substrate layer (2) is laminated to the resin film (1) via the first adhesive layer and the second substrate layer (3) is laminated to the first substrate layer (2) via the second adhesive layer, wherein each of the first substrate layer (2) and the second substrate layer (3) is a resin foam or a nonwoven fabric and the density of each of the first substrate layer (2) and the second substrate layer (3) is 0.005 to 1.0 g/cm³, **characterized in that** a thickness of the first substrate layer (2) is thinner than a thickness of the second substrate layer (3), and that the sound-absorbing material (10) further comprises a metal vapor deposition layer on at least one surface of the resin film (1).

2. The sound-absorbing material (10) according to claim 1, wherein the resin film (1) is formed from a polyolefin, a polyester, or a polyamide.

3. The sound-absorbing material (10) according to any one of claims 1 to 2, , wherein the thickness is 1 to 100 mm.

4. The sound-absorbing material (10) according to any one of claims 1 to 3, wherein the sound-absorbing material (10) has a normal incidence sound absorption coefficient of 0.3 or higher at a frequency of 1 kHz or less as measured according to JIS A 1405-1.

## Patentansprüche

1. Schallabsorbierendes Material (10), das eine Harzfolie (1); eine erste Klebeschicht; eine erste Substratschicht (2) mit Verbindungslöchern; eine zweite Klebeschicht; und eine zweite Substratschicht (3) mit Verbindungslöchern in dieser Reihenfolge umfasst, wobei die erste Substratschicht (2) über die erste Klebeschicht auf die Harzfolie (1) laminiert ist und die zweite Substratschicht (3) über die zweite Klebeschicht auf die erste Substratschicht (2) laminiert ist, wobei jede der ersten Substratschicht (2) und der zweiten Substratschicht (3) ein Harzschaum oder ein Vliesstoff ist und die Dichte jeder der ersten Substratschicht (2) und der zweiten Substratschicht (3) 0,005 bis 1,0 g/cm³ beträgt, **dadurch gekennzeichnet, dass** eine Dicke der ersten Substratschicht (2) dünner ist als eine Dicke der zweiten Substratschicht (3), und dass das schallabsorbierende Material (10) ferner eine Metalldampfabscheidungsschicht auf mindestens einer Oberfläche der Harzfolie (1) umfasst.

2. Schallabsorbierendes Material (10) gemäß Anspruch 1, wobei die Harzfolie (1) aus einem Polyolefin, einem Polyester oder einem Polyamid gebildet ist.

3. Schallabsorbierendes Material (10) gemäß einem der Ansprüche 1 bis 2, wobei die Dicke 1 bis 100 mm beträgt.

4. Schallabsorbierendes Material (10) gemäß einem der Ansprüche 1 bis 3, wobei das schallabsorbierende Material (10) gemessen gemäß JIS A 1405-1 einen Schallabsorptionskoeffizienten bei senkrechtem Einfall von 0,3 oder höher bei einer Frequenz von 1 kHz oder weniger aufweist.

## Revendications

1. Matériau insonorisant (10) comprenant un film de résine (1) ; une première couche adhésive ; une première couche de substrat (2) ayant des trous de communication ; une seconde couche adhésive ; et une seconde couche de substrat (3) ayant des trous de communication, dans cet ordre, dans lequel la première couche de substrat (2) est stratifiée sur le film de résine (1) par l'intermédiaire de la première couche adhésive et la seconde couche de substrat (3) est stratifiée sur la première couche de substrat (2) par l'intermédiaire de la seconde couche adhésive, dans lequel chacune de la première couche de substrat (2) et de la seconde couche de substrat (3) est une mousse de résine ou un tissu non tissé et la densité de chacune de la première couche de substrat (2) et de la seconde couche de substrat (3) est de 0,005 à 1,0 g/cm³, **caractérisé en ce qu'**une épaisseur de la première couche de substrat (2) est plus fine qu'une épaisseur de la seconde couche de substrat (3), et **en ce que** le matériau absorbant le son (10) comprend en outre une couche de dépôt de vapeur métallique sur au moins une surface du film de résine (1).

2. Matériau insonorisant (10) selon la revendication 1, dans lequel le film de résine (1) est formé d'une polyoléfine, d'un polyester ou d'un polyamide.

3. Matériau insonorisant (10) selon l'une quelconque des revendications 1 à 2, dans lequel l'épaisseur est de 1 à 100 mm.

4. Matériau insonorisant (10) selon l'une quelconque des revendications 1 à 3,
dans lequel le matériau insonorisant (10) a un coefficient d'insonorisation à incidence normale de 0,3 ou plus à une fréquence de 1 kHz ou moins, mesuré selon la norme JIS A 1405-1.
